# EUROPEAN PATENT APPLICATION

(11) **EP 2 447 215 A2**
(43) Date of publication of application: **02.05.2012**
(21) Application number: 10748893.4
(22) Date of filing: 21.06.2010
(51) Int. Cl.: C01G 45/00, H01M 4/505

(54) **POSITIVE ELECTRODE ACTIVE MATERIAL AND LITHIUM SECONDARY BATTERY USING SAME**

(30) Priority: 25.06.2009 JP 2009150415; 29.09.2009 JP 2009225091
(71) Applicant: NGK Insulators, Ltd., Nagoya-shi, Aichi 467-8530 (JP)
(72) Inventor: YURA, Yukinobu, Nagoya-shi Aichi 467-8530 (JP); KOBAYASHI, Nobuyuki, Nagoya-shi Aichi 467-8530 (JP); NANATAKI, Tsutomu, Nagoya-shi Aichi 467-8530 (JP); KAIGAWA, Kazuyuki, Nagoya-shi Aichi 467-8530 (JP)
(74) Representative: Paget, Hugh Charles Edward
(86) International application number: PCT/JP2010/060930
(87) International publication number: WO 2010/101307

(57) **Abstract**

There is provided a positive electrode active material comprising a large number of crystal grains composed of lithium manganate of spinel structure, wherein the large number of crystal grains contain primary particles of 3 to 20 µm in particle diameter by 70 areal % or more relative to all the crystal grains, the primary particles contain a component having a rectangular plane, and the ratio of the total area of all the rectangular planes to the total surface area of the primary particles is 0.5 to 5%.

## Description

### Technical Field

The present invention relates to a positive electrode active material for lithium secondary battery and a lithium secondary battery using this positive electrode active material.

### Background Art

In recent years, portable electronics such as cellphone, laptop computer and the like have become smaller in size and lighter at an accelerated pace. As the battery for electric source of these electronics, there has come to be used a secondary battery which uses a lithium transition metal composite oxide as the positive electrode active material, a carbonaceous material as the negative electrode active material, and an organic electrolytic solution obtained by dissolving a Li ion electrolyte in an organic solvent as the electrolytic solution.

Such a secondary battery is generally called lithium secondary battery or lithium ion battery, and has features of a high energy density and a high unit-cell voltage of about 4 V. Therefore, it has been drawing attention not only as an electric source of portable electronics but also as a motor driven electric source of the electric vehicle (EV) or hybrid electric vehicle (HEV), which has been intended to become widespread among the public as a low-emission vehicle in view of recent environmental problems.

Such a characteristics of lithium secondary battery is largely dependent upon the properties of the positive electrode active material used therein. A lithium transition metal composite oxide is used as the positive electrode active material, and specific examples thereof include lithium cobaltate (LiCoO₂) , lithium nickelate (LiNiO₂) and lithium manganate (LiMn₂O₄). Of these lithium transition metal composite oxides, lithium manganate of spinel structure, which is inexpensive and superior in safety, is being used mainly. However, the lithium manganate has a problem of power reduction (i.e. cycle characteristics) with the lapse of high-temperature cycle.

As the reason for the inferior cycle characteristics of the lithium manganate, there are considered, for example, a reduction in the crystallinity of the lithium manganate at high temperatures, caused by the dissolution of Mn due to the free acid generated from electrolyte, and an adverse effect on the negative electrode per se, caused by the deposition of the dissolved Mn on the surface of negative electrode material (e.g. graphite).

In order to solve the above problem, there were disclosed that primary particles which have an octahedral shape of about 6 µm in size, are highly crystalline, and are superior in cycle characteristics when used in lithium secondary battery (see, for example, Patent Document 1), and primary particles which have a nearly octahedral shape and are low in internal resistance (see, for example, Patent Document 2). Incidentally, this octahedral shape is a crystal habit which appears when a highly crystalline lithium manganate crystal of spinel structure is fired at a high temperature, for example, 780°C or higher (the release of oxygen in the crystal begins at this temperature).

### Prior Art Document

### Patent Document

Patent Document 1: JP-A-2000-340231
Patent Document 2: JP-A-2000-113889

### Summary of the Invention

In the lithium secondary battery obtained by the above solving methods, however, there has been a problem that the maintenance of sufficient capacity is impossible, that is, there is a reduction in rate characteristics under charge and discharge at a high rate. Because the positive electrode active material powder, which is constituted by the large-diameter crystal grains (whose specific surface area is made small for higher cycle characteristics), for example, crystal grains containing primary particles of 3 to 20 µm in particle diameters by 70 areal % or more, is small in the area capable of deintercalation or intercalation of lithium and large in the diffusion distance in-solid of Li.

The present invention has been made in view of such a problem of the prior art. The object of the present invention is to provide a positive electrode active material which comprises the large-diameter crystal grains and can constitute a lithium secondary battery superior in cycle characteristics as well as rate characteristics.

Also, the object of the present invention is to provide a lithium secondary battery superior in cycle characteristics and rate characteristics.

The present inventors made an extensive study in order to achieve the above objects. As a result, it was found that the above objects could be achieved by making a positive electrode active material contain the large-diameter primary particles of octahedral shape, which has an exposed rectangular plane such as formed by cutting a quadrangular pyramid from the octahedral vertex. The finding has led to the completion of the present invention.

The present invention provides a positive electrode active material and a lithium secondary battery, both shown below.

[1] A positive electrode active material comprising a large number of crystal grains composed of lithium manganate of spinel structure, wherein the large number of crystal grains contain primary particles of 3 to 20 µm in particle diameter by 70 areal % or more relative to all the crystal grains, the primary particles contain a component having a rectangular plane, and the ratio of the total area of all the rectangular planes to the total surface area of the primary particles is 0.5 to 5%.

[2] The positive electrode active material according to [1], wherein the crystal grains have a specific surface area of 0.1 to 0.5 m²/g.

[3] The positive electrode active material according to [1] or [2], wherein the large number of crystal grains contain single particles by 40 areal % or more.

[4] The positive electrode active material according to any one of [1] to [3], wherein the large number of crystal grains further contain secondary particles each formed by mutual connection of a plurality of the primary particles.

[5] A lithium secondary battery comprising an electrode body having a positive electrode containing a positive electrode active material according to any one of [1] to [4] and a negative electrode containing a negative electrode active material.

The positive electrode active material of the present invention comprises the large-diameter crystal grains and can constitute a lithium secondary battery superior in cycle characteristics as well as rate characteristics.

The lithium secondary battery of the present invention is superior in cycle characteristics and rate characteristics.

### Brief Description of the Drawings

[Fig. 1] Fig. 1 is a schematic view showing an example of a primary particle having a rectangular plane.
[Fig. 2A] Fig. 2A is a secondary electron image photograph obtained by scanning electron microscope, showing an example of a primary particle having a rectangular plane.
[Fig. 2B] Fig. 2B is a secondary electron image photograph obtained by scanning electron microscope, showing another example of a primary particle having a rectangular plane.
[Fig. 2C] Fig. 2C is a secondary electron image photograph obtained by scanning electron microscope, showing still another example of a primary particle having a rectangular plane.
[Fig. 2D] Fig. 2D is a secondary electron image photograph obtained by scanning electron microscope, showing still another example of a primary particle having a rectangular plane.
[Fig. 2E] Fig. 2E is a secondary electron image photograph obtained by scanning electron microscope, showing still another example of a primary particle having a rectangular plane.
[Fig. 2F] Fig. 2F is a secondary electron image photograph obtained by scanning electron microscope, showing still another example of a primary particle having a rectangular plane.
[Fig. 3A] Fig. 3A is a secondary electron image photograph obtained by scanning electron microscope, showing an example of a primary particle which can not be confirmed as a primary particle having a rectangular plane.
[Fig. 3B] Fig. 3B is a secondary electron image photograph identified obtained by scanning electron microscope, showing an example of a primary particle which can not be confirmed as a primary particle having a rectangular plane because it has a roundish edge.
[Fig. 3C] Fig. 3C is a secondary electron image photograph obtained by scanning electron microscope, showing an example of a primary particle which can not be confirmed as a primary particle having a rectangular plane because it has a partially-chipped off rectangular plane.
[Fig. 3D] Fig. 3D is a secondary electron image photograph obtained by scanning electron microscope, showing an example of a primary particle which can not be confirmed as a primary particle having a rectangular plane because it has a rectangular plane which is partially hidden by another particle.
[Fig. 4] Fig. 4 is a sectional view showing en embodiment of the lithium secondary battery of the present invention.
[Fig. 5] Fig. 5 is a schematic view showing an example of an electrode body constituting another embodiment of the lithium secondary battery of the present invention.
[Fig. 6A] Fig. 6A is a schematic view showing a state in which crystal grains adhere to each other in a section of the positive electrode active material of the present invention.
[Fig. 6B] Fig. 6B is a schematic view showing a state in which crystal grains adhere to each other in a section of the positive electrode active material of the present invention.
[Fig. 6C] Fig. 6C is a schematic view showing a state in which crystal grains adhere to each other in a section of the positive electrode active material of the present invention.
[Fig. 6D] Fig. 6D is a schematic view showing a state in which crystal grains adhere to each other in a section of the positive electrode active material of the present invention.

### Mode for Carrying out the Invention

The embodiment of the present invention is described below. However, the present invention is in no way restricted to the following embodiment. It should be construed that appropriate changes, improvements, etc. can be added to the following embodiment based on the ordinary knowledge possessed by those skilled in the art as long as there is no deviation from the gist of the present invention and that the resulting embodiments as well fall in the scope of the present invention.

### 1. Positive electrode active material

The positive electrode active material of the present invention comprises a large number of crystal grains composed of lithium manganate of spinel structure. The detail thereof is described below.

### 1-1. Crystal grains

The crystal grains used in the positive electrode active material of the present invention are composed of lithium manganate of spinel structure.

### 1-1-1. Composition

The chemical formula of lithium manganate is ordinarily represented by LiMn₂O₄. The lithium manganate constituting the crystal grains used in the positive electrode active material of the present invention is not restricted to the above composition, and the lithium manganate represented by the following formula (1) can also be used preferably similarly to the lithium manganate represented by LiMn₂O₄.

LiMₓMn₂₋ₓO₄ (1)

In the above general formula (1), M shows a Mn-substituting element and specifically shows at least one kind of element (substituting element) selected from the group consisting of Li, Fe, Ni, Mg, Zn, Al, Co, Cr, Si, Sn, P, V, Sb, Nb, Ta, Mo and W. Incidentally, the substituting element M may further include Ti, Zr and Ce in addition to the above-mentioned at least one kind of element. X shows the substituting number of the substituting element M and is 0.05 ≦ X ≦ 0.3. Li becomes + mono-valent ion; Fe, Mn, Ni, Mg and Zn each become + bi-valent ion; B, Al, Co and Cr each become + tri-valent ion; Si, Ti, Sn, Zr and Ce each become + tetra-valent ion; P, V, Sb, Nb and Ta each become + penta-valent ion; Mo and W each become + hexa-valent ion; and all these elements are present theoretically in LiMn₂O₄ in the form of solid solution. Incidentally, Co and Sn may take + bi-valency; Fe, Sb and Ti may take + tri-valency; Mn may take + tri- and + tetra-valencies; and Cr may take + tetra- and + hexa-valencies. Therefore, the substituting element M may be present in a state of mixed valencies. As to the number of oxygen atom, the number need not necessarily be 4 and may be excessive or insufficient as long as the required crystal structure is maintained.

The molar ratio (Li/Mn) of the Li and Mn contained in the lithium manganate constituting the crystal grains used in the positive electrode active material of the present invention is preferably Li/Mn > 0.5. Incidentally, in the case of the Mn is substituted by the Li, Li/Mn = (1+X)/(2-X), and in the case of the Mn is substituted by a substituting element M other than Li, Li/Mn = 1/(2-X); therefore, in either case, Li/Mn > 0.5 as long as X > 0. From this, Li/Mn > 0.5 indicates that at least one of the Mn atom of the lithium manganate is substituted by the substituting elements M including Li. And it is preferred that, in the lithium manganate constituting the crystal grains used in the positive electrode active material of the present invention, at least one of the Mn atoms in unit cell is substituted. In the case of the Mn-substituted lithium manganate is used, as compared with the case of the non-substituted lithium manganate represented by LiMn₂O₄ is used, the crystal structure is more stabilized, making it possible to obtain a lithium secondary battery higher in cycle characteristics. Incidentally, Al is particularly preferred as a specific example of the substituting element M which substitutes Mn atom of the lithium manganate.

The crystal grains may be particles composed of lithium manganate (e.g. LiNi_{0.5}Mn_{1.5}O₄) in which 25 to 55 mol % of the total Mn is substituted by Ni, Co, Fe, Cu, Cr or the like. The positive electrode active material obtained by using such a lithium manganate allows production of a lithium secondary battery which is superior in cycle characteristics and rate characteristics and further has a high charge-discharge potential and a high energy density. Therefore, it allows production of a lithium secondary battery having an electromotive force of 5 V level.

### 1-1-2. Shape

The crystal grains comprised in the positive electrode active material of the present invention contain primary particles of 3 to 20 µm in particle diameter by 70 areal % or more relative to all the crystal grains. These primary particles contain a component having a rectangular plane, and the ratio of the total area of all the rectangular planes to the total surface area of the primary particles of 3 to 20 µm in particle diameter is 0.5 to 5%.

The primary particles of the lithium manganate of spinel structure having the above-mentioned composition, when fired at high temperatures, ordinarily have an octahedral shape whose eight faces (crystal habit) are formed by (111) faces. Meanwhile, the crystal grains comprised in the positive electrode active material of the present invention contain primary particles having an exposed rectangular plane such as formed by cutting off a quadrangular pyramid from the vertex of the above-mentioned octahedral shape. Incidentally, depending on the production methods, there is a case that scar, deposit, etc. are present on the rectangular plane, making it difficult to confirm the rectangular plane. In such a case, by conducting a heat treatment appropriately under the air at a temperature lower by 10 to 100°C than the firing temperature of the positive electrode active material, the crystal faces are smoothened with no change in particle diameter and the deposit is removed, making it easy to confirm the rectangular plane.

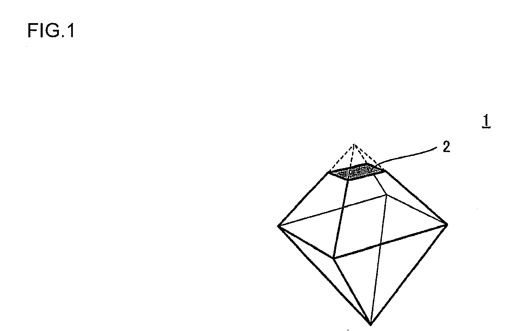

The "rectangular plane such as formed by cutting off a quadrangular pyramid from the vertex" is a plane such as gray-colored plane of Fig. 1. Incidentally, in Fig. 1, the quadrangular pyramid to be cut off is shown by a broken line. In the production method of crystal grains, described later, for example, when a sheet-shaped formed body is fired, crystal growth in sheet thickness direction is suppressed. That is, development in (111) face (which is the crystal face of lithium manganate of spinel structure) is suppressed. As a result, crystal growth stops in a state that a (100) face (which is stable next to the (111) face) is exposed, and it is considered that a "rectangular plane such as formed by cutting off a quadrangular pyramid from the vertex" is formed. Incidentally, Fig. 1 is a schematic view showing an example of a primary particle 1 having a rectangular plane, wherein a rectangular plane formed by cutting off a quadrangular pyramid (shown by a broken line in Fig. 1) from the vertex is shown as a gray plane 2.

The (111) face of the primary particles of lithium manganate of spinel structure is a face which is close-packed plane of oxygen atoms and accordingly is effective for suppression of Mn dissolution under charge-discharge cycle; meanwhile, the face is considered to suppress the deintercalation and intercalation of Li during charge and discharge. Further, in the positive electrode active material powder comprising the crystal grains of large-diameters, since the diffusion distance in-solid is large, there is a tendency of reduction in rate characteristics. The primary particles of large-diameters contained in the positive electrode active material of the present invention have not only a (111) face but also a (100) face at a certain proportion; therefore, the deintercalation and intercalation of Li can be activated while Mn dissolution is suppressed, and accordingly the lithium secondary battery is presumed to be possible of improvement in the rate characteristics with no reduction in cycle characteristics.

In the crystal grains comprised in the positive electrode active material of the present invention, the proportion of primary particles which are lithium manganate of spinel structure and have particle diameters of 3 to 20 µm (hereinafter, described as "large-particle ratio"), is 70 areal % or more, preferably 80 areal % or more, more preferably 90 areal % or more. With the large-particles ratio of 70 areal % or more, the specific surface area is decreased; the dissolution of Mn into electrolytic solution is suppressed; the tap density is increased; and the electrode capacitance can be increased. There is no particular restriction as to the upper limit of the large-particle ratio; however, the large-particle ratio is preferably 98 areal % or less. When the large-particle ratio is 98 areal % or more, there may be deposition of particles when it is coated onto electrode.

As the crystal grains not included in the above-mentioned primary particles, there can be mentioned crystal grains composed of other material such as lithium nickelate, lithium cobaltate, lithium iron phosphate or the like. When these crystal grains are mixed into the positive electrode active material powder, there is confirmed that whether or not individual crystal grains are lithium manganate of spinel structure by composition distribution measurement such as crystal structure analysis by XRD measurement, EDX in scanning electron microscope observation, or the like.

Incidentally, the particle diameter of primary particles and the large-particle ratio are measured by the following methods.

### (Measurement method of particle diameter)

A positive electrode active material powder is placed on a carbon tape so that there is no piling of particles; Au is coated thereon in a thickness of about 10 nm using an ion sputtering apparatus; then, a secondary electron image of particles is taken, using a scanning electron microscope, by selecting such a magnification that 20 to 50 primary particles each having the maximum diameter of 5 µm or larger are seen in the visual field. For each primary particle in the image obtained, there is calculated an average value of the maximum diameter of the particle part not hidden by other particles and the largest diameter of the diameters at right angles to the above maximum diameter, and the average value is taken as the particle diameter (µm) of the primary particle. In this way, particle diameters are measured for all primary particles excluding the particles which are hidden by other particles and are uncalculable.

### (Measurement method of large-particle ratio)

A positive electrode active material powder is placed on a carbon tape so that there is no piling of particles; Au is coated thereon in a thickness of about 10 nm using an ion sputtering apparatus; then, a secondary electron image of particles is taken, using a scanning electron microscope, by selecting such a magnification that 20 to 50 primary particles each having the maximum diameter of 5 µm or larger are seen in the visual field. In the image obtained, there are measured the area (total surface area (A)) occupied by all crystal grains whose particle diameters can be measured as mentioned above and the area occupied by the primary particles of 3 to 20 µm in particle diameter (surface area (a) of large-particle primary particles) using an image edit software ("photoshop" (trade name), a product of Adobe Systems Incorporated). An expression (a/A)x100 is calculated, and the result is taken as large-particle ratio (%).

The proportion of rectangular plane (hereinafter described as "rectangular plane ratio") in the total surface area of the primary particles of 3 to 20 µm of the crystal grains of the present invention is 0.5 to 5.0%, preferably 0.7 to 5.0%, more preferably 0.8 to 5.0%. When the rectangular plane ratio is 0.5 to 5.0%, both effects such as suppression of Mn dissolution and improvement of deintercalation and intercalation of Li can be expected, making it possible to obtain a lithium secondary battery superior in rate characteristics and cycle characteristics. Incidentally, when the rectangular plane ratio is larger than 5.0%, the effect of suppression of Mn dissolution may decrease and the lithium secondary battery produced may be low in cycle characteristics. Incidentally, the rectangular plane ratio is measured by the following method.

### (Measurement method of rectangular plane ratio)

A positive electrode active material powder is placed on a carbon tape so that there is no piling of particles; Au is coated thereon in a thickness of about 10 nm using an ion sputtering apparatus; then, a secondary electron image of particles is taken, using a scanning electron microscope, by selecting such a magnification that 20 to 50 primary particles each having the maximum diameter of 5 µm or larger are seen in the visual field. In the image obtained, there are measured the area occupied by all the crystal grains (total surface area (A)) and the area of all the confirmable rectangular parts (area (b) of rectangular planes) using an image edit software ("photoshop" (trade name), a product of Adobe Systems Incorporated). An expression (b/A) x100 is calculated, and the result is taken as rectangular plane ratio (%). Incidentally, the rectangular parts refer to the image area, occupied by the rectangular planes of the planes surrounded by four straight ridgelines. When it is difficult to confirm the rectangular plane, it may be possible, as mentioned previously, to conduct a heat treatment under the air at a temperature lower by 10 to 100°C than the firing temperature of positive electrode active material to smoothen the crystal faces and remove the deposits present thereon.

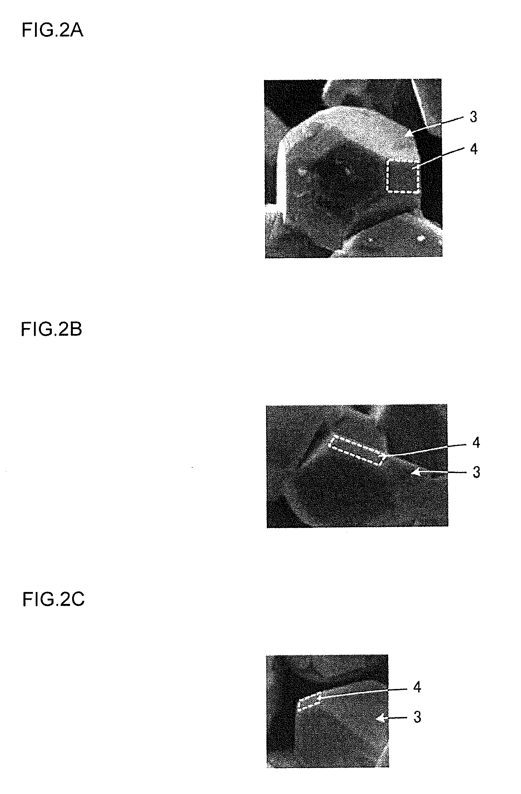

The rectangular planes include not only planes shown as rectangle in the image, but also planes which are not rectangle in the image but are presumed to be actually rectangle (see, for example, Fig. 2A to Fig. 2F). As to the planes which cannot be confirmed as rectangular plane because part of the ridgelines constituting each plane is unclear, such planes are judged as rectangular plane when they satisfy both of the following conditions 1 and 2.

### Condition 1

When the clear ridgeline(s) is (are) extended so as to restore the four sides and angles of the plane, the plane formed is a rectangle.

### Condition 2

The longest length of the clear parts of the ridgelines constituting of plane is 50% or larger of the length of one side of the plane formed by extending the clear parts. Incidentally, Fig. 2A to Fig. 2F are each a secondary electron image photograph obtained by scanning electron microscope, showing an example of a primary particle having a rectangular plane, wherein a rectangular plane 4 is a plane surrounded by a broken line.

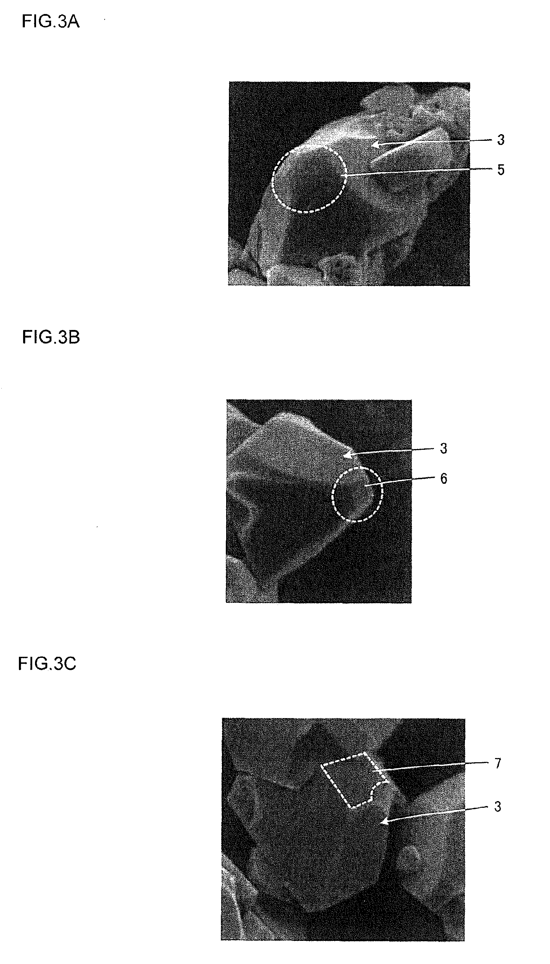

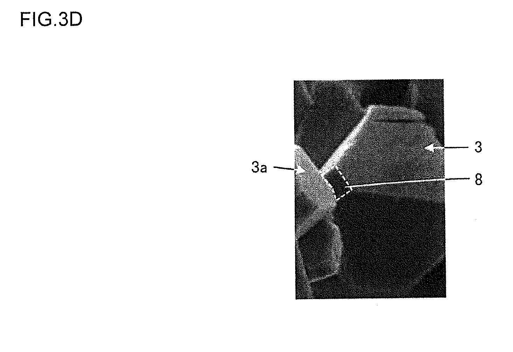

As specific examples of the plane which is not judged as a rectangular plane based on the above definitions and conditions, there can be mentioned a case in which plane per se is not formed (see, for example, Fig. 3A), a case in which the vertex of crystal grain is roundish and most of the ridgelines are unclear (see, for example, Fig. 3B), a case in which an angle of rectangular plane is chipped off (see, for example, Fig. 3C), and a case in which part of the rectangular plane is hidden by another crystal grain of image (see, for example, Fig. 3D). Incidentally, Fig. 3A is a secondary electron image photograph obtained by scanning electron microscope, showing an example of a primary particle which cannot be judged as a primary particle having a rectangular plane, wherein a part 5 forming no plane is shown in a part surrounded by a broken line. Fig. 3B is a secondary electron image photograph obtained by scanning electron microscope, showing an example of a primary particle which cannot be judged as a primary particle having a rectangular plane because its vertex is roundish, wherein a plane 6 (whose ridgelines are unclear) is shown in a part surrounded by a broken line. Fig. 3C is a secondary electron image photograph obtained by scanning electron microscope, showing an example of a primary particle which cannot be judged as a primary particle having a rectangular plane because a part of rectangular plane is chipped off, wherein a plane 7 with a chipped-off angle is a plane surrounded by a broken line. Fig. 3D is a secondary electron image photograph obtained by scanning electron microscope, showing an example of a primary particle which cannot be judged as a primary particle having a rectangular plane because a part of rectangular plane is hidden by another particle, wherein a plane 8 hidden partially by another crystal grain 3a is a plane surrounded by a broken like.

The specific surface area of the crystal grains comprised in the positive electrode active material of the present invention is preferably 0.1 to 0.5 m²/g, more preferably 0.15 to 0.4 m²/g, particularly preferably 0.17 to 0.35 m²/g. When the specific surface area of crystal grains is 0.1 to 0.5 m²/g, the reduction in cycle characteristics can be prevented. Incidentally, the specific surface area can be measured using "Flowsorb III 2305" (trade name, a product of Shimadzu Corporation), using nitrogen as an adsorption gas.

The large number of crystal grains contained in the positive electrode active material of the present invention preferably contain single particles by 40 areal % or more. That is, the proportion of the single particles contained in the large number of crystal grains is preferably 40 areal % or more. When the proportion of the single crystals is less than 40 areal %, the amount of secondary particles such as polycrystal particles, agglomerated particles and the like is relatively large; thereby, the diffusion of Li ion is hindered at the particle boundary parts of secondary particles, which may cause a reduction in rate characteristics. Incidentally, in the present specification, "single particle" refers to a crystal grain present independently, of the crystal grains contained in the large number of crystal grains; that is, a crystal grain not forming a polycrystal particle or an agglomerated particle.

The proportion (areal %) of the single particles contained in the large number of crystal grains can be determined by the following method. A positive electrode active material is mixed with a conductive resin ("Technovit 5000" (trade name), a product of Heraeus Kulzer GmbH), followed by curing. Then, the cured material is subjected to mechanical grinding and then ion-polished using a cross section polisher ("SM-09010" (trade name), a product of JEOL Ltd.). The backscattered electron image of the ion-polished material is taken, using a scanning electron microscope ("ULTRA 55" (trade name), a product of Carl Zeiss, Inc.), and the cross section of the positive electrode active material is observed.

In the backscattered electron image, the contrast differs owing to channeling effect when the direction of crystal differs. Therefore, when a particle boundary part is present in the crystal grain being observed, the particle boundary part becomes clear or unclear by slightly changing the direction of observation of sample (the inclination of sample). Utilizing this phenomenon, the presence of particle boundary part can be confirmed; thereby, there can be identified whether or not a crystal grain is a single particle, or a polycrystal particle formed by connection of primary particles of different crystal directions or an agglomerated particle.

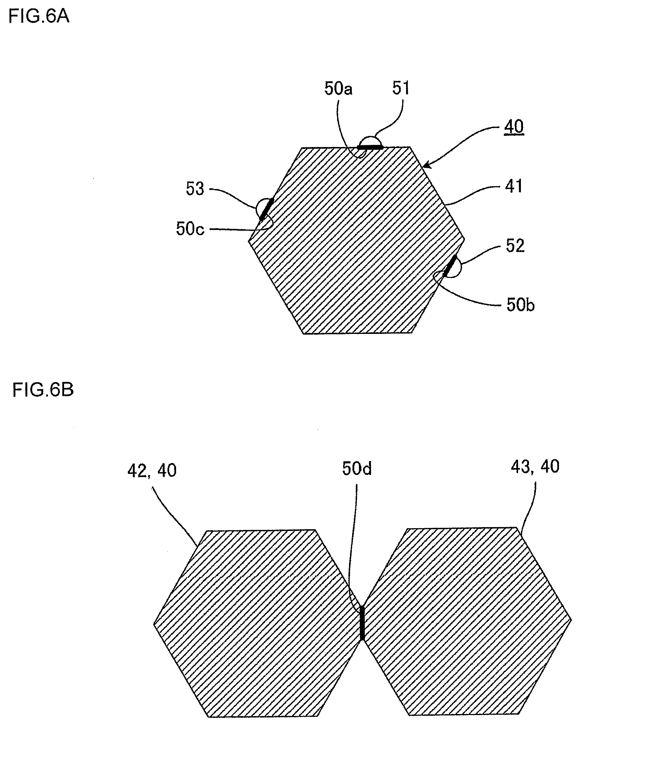

There is a case in which microparticles (crystal grains) significantly smaller in diameter (e.g. about 0.1 to 1 µm) than the particle diameter of single particle adhere onto the surface of a crystal grain (see Fig. 6A). Also, there is a case in which polycrystal particles or agglomerated particles adhere onto each other at a small part (see Fig. 6B). In such cases, the parts (adhesion parts 50a to 50c in Fig. 6A) at which microparticles 51 to 53 adhere onto the surface of a crystal grain 41, and the part (adhesion part 50d in Fig. 6B) at which crystal grains 42 and 43 are in contact with each other, are slight; therefore, there is no influence on rate characteristics and durability. Accordingly, such crystal grains can be regarded substantially as single particle. Specifically explaining, when the length of adhesion part (the total of all adhesion parts when there are a plurality of adhesion parts) of a crystal grain is 1/5 or smaller relative to the circumference of the crystal grain estimated from the backscattered electron image by using an image edit software ("Image-Pro" (trade name), a product of Media Cybernetics, Inc.), the crystal grain is regarded as single particle and is counted.

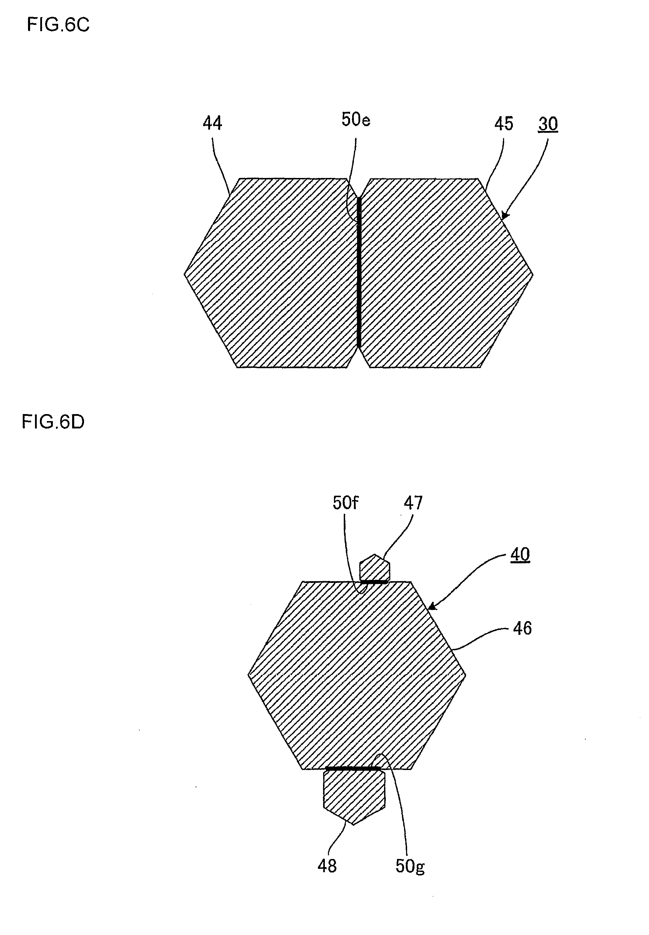

Fig. 6A to Fig. 6D are each a schematic drawing showing a state in which crystal grains adhere to each other, in the section of the positive electrode active material of the present invention. For example, Fig. 6A is a case in which three microparticles 51 to 53 adhere onto the surface of a crystal grain 41 and the total of the lengths of adhesion parts 50a to 50c is 1/5 or smaller relative to the circumference of the crystal grain 41. In this case, the crystal grain 41 is regarded as single particle. Meanwhile, any of the microparticles 51 to 53 is not regarded as single particle because the length of each adhesion part is 1/5 or larger relative to the circumference of each microparticle. Fig. 6B is a case in which crystal grains 42 and 43 adhere to each other and the length of adhesion part 50d is 1/5 or smaller relative to the circumference of the crystal grain 42 or 43. In this case, the crystal grains 42 and 43 are each regarded as single particle. Fig. 6C is a case in which crystal grains 44 and 45 adhere to each other and the length of adhesion part 50e is 1/5 or larger relative to the circumference of the crystal grain 44 or 45. In this case, any of the crystal grains 44 and 45 is not regarded as single particle. Fig. 6D is a case in which two small crystal grains 47 and 48 (not microparticles) adhere onto the surface of a crystal grain 46 and the total of the lengths of adhesion parts 50f and 50g is 1/5 or smaller relative to the length of the circumference of the crystal grain 46. In this case, the crystal grain 46 is regarded as single particle. Meanwhile, any of the crystal grains 47 and 48 is not regarded as single particle because the length of each adhesion part is 1/5 or larger relative to the circumference of the crystal grain 47 or 48.

In this way, there is judged whether or not each crystal grain is a single particle. The proportion (areal %) of single particles can be calculated by measuring the area (C) occupied by all crystal grains whose areas can be measured from the backscattered electron image and the area (c) occupied by all single particles by using the above-mentioned image edit software and substituting them into an expression (c/C)x100.

Preferably, the large number of crystal grains comprised in the positive electrode active material of the present invention further contain secondary particles each formed by mutual connection of a plurality of primary particles. Also preferably, the secondary particles are each formed by in-plane connection of a plurality of primary particles. Such connection provides the following advantages. That is, each primary particle has no particle boundary part (which inhibits the diffusion of Li) in the thickness direction of plane; therefore, there can be maintained about the same charge-discharge property as when there is used a positive electrode active material containing a large number of single particles and containing no secondary particle; meanwhile, there is obtained a smaller specific surface area than in the large number of single particles free from secondary particles, resulting in the higher durability (higher cycle characteristics) of positive electrode active material.

When the secondary particles are formed by in-plane connection of primary particles, it is preferable that 2 to 20 primary particles of 3 to 20 µm in average particle diameter are connected. When the number of connection of primary particles is larger than 20, the secondary particles formed has a flat shape of large aspect ratio; when filling is made so that the flat face is parallel to the surface of positive electrode plate, the diffusion distance of Li ion into the thickness direction of positive electrode plate becomes long and a reduction in rate characteristics is incurred, which is not preferred.

### 1-2. Production method of crystal grains

There is no particular restriction as to the production method of crystal grains used in the positive electrode active material of the present invention. As the production method of crystal grains, there can be mentioned, for example, the following method.

There can be mentioned a method which comprises a formation step of forming a formed body containing lithium and manganese, a firing step of firing the formed body to obtain a fired article; and a grinding step of subjecting the fired article to grinding and classification. Each step is explained below in order.

### 1-2-1. Formation step

As the forming materials, there can be used, for example, a mixture obtained by mixing, at a given ratio, raw material compounds each containing an element constituting the lithium manganate represented by the above-mentioned general formula (1).

As the raw material compound containing lithium, there can be preferably used, for example, a carbonate, a hydrochloride, a nitrate, a sulfate, a hydroxide, an organic acid salt and a halide, which are all stable chemically. Several kinds of these compounds can be also used in appropriate combination. Specifically, there can be mentioned Li₂CO₃, LiNO₃, LiOH, Li₂O₂, Li₂O, CH₃COOLi, etc.

As the raw material compounds containing elements (including manganese and a particle growth-promoting agent) other than lithium, there can be preferably used oxides and salts of respective elements. As to the salt of each element, there is no particular restriction; however, there are preferably used salts of high purity and low cost. Specifically, there are preferably used a carbonate, a hydroxide and an organic acid salt. However, a nitrate, a hydrochloride, a sulfate, etc. maybe used as well. As the manganese compound, there can be mentioned, for example, MnO₂, MnO, Mn₂O₃, Mn₃O₄, MnCO₃ and MnOOH. When Mn is substituted by a substituting element other than Li, the mixed powder may contain an aluminum compound, a magnesium compound, a nickel compound, a cobalt compound, a titanium compound, a zirconium compound, a cerium compound, etc. As the aluminum compound, there can be mentioned, for example, α-Al₂O₃, γ-Al₂O₃, A100H and Al(OH)₃. As the magnesium compound, there can be mentioned, for example, MgO, Mg(OH)₂ and MgCO₃. As the nickel compound, there can be mentioned, for example, NiO, Ni(OH)₂, and NiNO₃. As the cobalt compound, there can be mentioned, for example, Co₃O₄, CoO and Co(OH)₃. As the titanium compound, there can be mentioned, for example, TiO, TiO₂ and Ti₂O₃. As the zirconium compound, there can be mentioned, for example, ZrO₂, Zr(OH)₄ and ZrO(NO₃)₂. As the cerium compound, there can be mentioned, for example, CeO₂, Ce(OH)₄ and Ce(NO₃)₃.

The mixed powder may be ground as necessary. The particle diameter of the mixed powder is preferably 10 µm or smaller. When the particle diameter of the mixed powder is larger than 10 µm, the mixed powder may be subjected to dry or wet grinding to make the particle diameter 10 µm or smaller. There is no particular restriction as to the method for grinding, and the grinding can be conducted using, for example, a pot mill, a beads mill, a hammer mill or a jet mill.

Next, the mixed powder prepared is used to produce a formed body. There is no particular restriction as to the shape of the formed body, and there can be mentioned, for example, a sheet shape, a granular shape, a hollow-granule shape, a flake shape, a honeycomb shape, a bar shape and a roll shape (a wound shape). In order to more effectively obtain primary particles which have particle diameters of 3 to 20 µm, the formed body can be produced as, for example, a sheet-shaped formed body of 10 to 30 µm in thickness, a hollow-shaped formed body having a shell thickness of 10 to 30 µm, a grain-shaped formed body of 10 to 30 µm in diameter, a flake-shaped formed body of 10 to 30 µm in thickness and 50 µm to 10 mm in size, a honeycomb-shaped formed body of 10 to 30 µm in partition wall thickness, a roll-shaped (wound) formed body of 10 to 30 µm in thickness, and a bar-shaped formed body of 10 to 30 µm in diameter. Of these, a sheet-shaped formed body of 10 to 30 µm in thickness is preferred.

The method for forming a sheet-shaped or flake-shaped formed body is not particularly restricted and the forming can be conducted, for example, by a doctor blade method, by a drum drier method in which a slurry of a mixed powder is coated on a hot drum and dried and then the dried material is scraped off using a scraper, by a disc drier method in which a slurry of a mixed powder is coated on a hot disc area and dried and then the dried material is scraped off using a scraper, or by an extrusion method in which a clay containing a mixed powder is extruded through a die with slits. Of these forming methods, there is preferred a doctor blade method capable of forming a uniform sheet-shaped formed body. The density of the formed body obtained by the above forming method may be increased by pressing using a roller or the like.

As the formation method of the hollow-shaped formed body, there can be mentioned, for example, a method of forming a hollow-shaped formed body using a spray drier and employing appropriately-set granulation conditions.

As the method for producing a grain-shaped formed body (a bulk shaped formed body) of 10 to 30 µm in diameter, there can be mentioned, for example, a spray dry method, a method of pressing a mixed powder by a roller or the like, and a method of cutting an extrudate which is a bar-shaped or sheet-shaped formed body. As the method for producing a honeycomb-shaped or bar-shaped formed body, there can be mentioned, for example, an extrusion method. Also, as the method for producing a roll-shaped formed body, there can be mentioned, for example, a drum dryer method.

The thickness of the sheet-shaped formed body and the shell thickness of the hollow-shaped formed body are preferably 10 to 30 µm, more preferably 12 to 25 µm, particularly preferably 14 to 20 µm. It is considered that the thickness of the sheet-shaped formed body and the shell thickness of the hollow-shaped formed body, both of 10 to 30 µm are made it possible to produce efficiently primary particles of 3 to 20 µm in particle diameter and having rectangular planes.

### 1-2-2. Firing step

Then, the formed body obtained is fired to obtain a fired body. There is no particular restriction as to the firing method. When a sheet-shaped formed body is fired, there are preferably used, for example, a method of placing each sheet-shaped formed body on a setter one by one so as to minimize the piling-up of sheets and conducting firing; a method of placing each crumpled sheet-shaped formed body in a cover-opened sagger and conducting firing; a method of filling sheet-shaped formed bodies each of several mm or smaller in one side, in a sagger and conducting firing; and a method of filling, in a sagger, a hollow-shaped formed body, a flake-shaped formed body, a bulk-shaped formed body, a honeycomb-shaped formed body, a bar-shaped formed body, or a roll-shaped formed body and conducting firing.

Incidentally, in firing a sheet-shaped formed body, a flake-shaped formed body or a honeycomb-shaped formed body, by conducting sufficient particle growth until the number of particles in the thickness direction of sheet becomes singleness, there can be obtained a fired body in which primary particles (whose diameters are roughly restricted by the thickness of the sheet or the like) are connected to each other in a plane. In firing a hollow-shaped formed body or a roll-shaped formed body, by conducting particle growth sufficiently until the number of particles in the thickness direction (shell thickness direction) becomes singleness, there can be obtained a sintered body wherein primary particles (whose particle diameters are roughly restricted by the shell thickness) are connected to each other in a curved plane. In firing a bar-shaped formed body, by conducting particle growth sufficiently until the number of particles in the thickness direction of the bar, there can be obtained a sintered body wherein primary particles (whose particle diameters are roughly restricted by the thickness of the bar) are connected to each other. In the above firing method, the primary particles after firing tend to have a rectangular plane such as formed,by cutting-off of a quadrangular pyramid from the vertex of octahedron by the surface of the fired body, and this is preferable. In firing a bulk-shaped formed body, since the particle growth of primary particles is restricted by the diameter (10 to 30 µm) of the bulk-shaped formed body, the primary particles after firing tend to have a rectangular plane such as formed by cutting-off of a quadrangular pyramid from the vertex of octahedron. By the above operation, there can be obtained a large number of crystal grains whose large-particle ratio is 70 areal % or more and whose rectangular plane ratio is 0.5 to 5%.

Besides the above-mentioned firing methods, there is preferred also a firing method of firing the above-mentioned forming material (mixed powder) per se. In this case, in order to obtain good contact of the mixed powder with the atmosphere during firing, it is preferred that the mixed powder is fired, for example, by making the deposited height of the mixed powder in a crucible or a sagger to make the large contact area of the mixed powder with the atmosphere. It is also preferred that the mixed powder is fired while stirring using a rotary kiln or the like.

The firing temperature is preferably 830 to 1,050°C. When the firing temperature is lower than 830°C, the particle growth of primary particles may be insufficient. Meanwhile, when the firing temperature is higher than 1,050°C, there is a case that lithium manganate releases oxygen and is decomposed into lithium manganate of layered rock salt structure and manganese oxide. Incidentally, by conducting the firing in a high oxygen partial pressure, the decomposition of lithium manganate at high temperatures can be suppressed, making it possible to obtain large-diameter primary particles. In this case, the oxygen partial pressure is preferably as high as possible and, for example, 50% or higher relative to the pressure of the atmosphere. The firing time is preferably about 5 to 50 hours.

By conducting the firing with a controlled temperature elevation rate, the particle diameter of primary particles after firing can be uniformized. In this case, the temperature elevation rate may be, for example, 50 to 500°C per hour. Also, by keeping the atmospheric temperature in a low temperature range and then conducting the firing at the firing temperature, it is possible to grow primary particles uniformly. In this case, the low temperature range may be 400 to 800°C when the formed body is fired, for example, at 900°C. The uniform growth of primary particles is also possible by forming crystal nuclei at a temperature higher than the firing temperature and then conducting the firing at a firing temperature. In this case, the temperature higher than the firing temperature may be 1,000°C, for example, when the firing temperature of the firing material is 900°C.

The firing can also be conducted in two stages. For example, a mixed powder of manganese oxide and alumina is formed into a sheet shape, the formed body is fired, a lithium compound is added thereto, and firing is conducted again, whereby lithium manganate can be produced. Also, lithium manganate crystal of high lithium content is produced, then manganese oxide or alumina is added, and firing is conducted again, whereby lithium manganate can be produced.

In order to efficiently produce primary particles having large diameters and a rectangular plane, it is preferred to add, to the forming material, a particle growth-promoting agent and conduct firing. As the particle growth-promoting agent, there can be mentioned, for example, a flux (e.g. NaCl or KCl) and a low-melting agent such as bismuth compound (Bi₂O₃), lead compound (PbO), antimony compound (Sb₂O₃), glass or the like. Of these, a bismuth compound (e.g. Bi₂O₃) is preferred. By adding a bismuth compound, large-diameter primary particles can be obtained even when firing is conducted at 1050°C at which the decomposition of lithium manganate becomes striking, or at a temperature lower than that. Incidentally, firing is preferably conducted, for example, in a state that the vaporization of bismuth is promoted (for example, under the air), so that the content of bismuth in the bismuth compound after firing becomes 0.005 to 0.5 mol % relative to the manganese in lithium manganate. In firing the forming material (mixed powder) per se, it is preferred to conduct the firing, for example, in a state that a sintered body (whose shape is plate-like or spherical) of a getter material (e.g. zirconia) capable of absorbing bismuth is appropriately placed in the mixed powder. Also, the forming material may contain, for promotion of particle growth, a seed crystal composed of lithium manganate of spinel structure, as a nucleus of particle growth. Further, the seed crystal and the particle growth-promoting agent may be added together. In this case, the particle growth-promoting agent may be added in a state that it is adhered to the seed crystal.

It is presumed that the presence of a bismuth compound and the above-mentioned seed crystal in firing promotes the growth of primary particles even at a relatively low temperature (e.g. about 900°C) and is effective for achieving a small specific surface area as well as high crystallinity. By thus conducting the firing, there can be prepared a polycrystal composed of primary particles of relatively large particle diameters and high crystallinity. Incidentally, in the firing of a sheet-shaped formed body, by conducting the particle growth sufficiently until the particles become singleness in the thickness direction of sheet, there can be prepared a sheet-shaped sintered body in which primary particles (whose particle diameters are roughly restricted by the thickness of sheet and are uniform) are connected in a plane.

### 1-2-3. Grinding step

The fired body obtained by the above firing step is subjected to wet or dry grinding treatment, classification treatment or both of them, whereby crystal grains having intended particle diameters and an intended proportion of single particles can be obtained. There is no particular restriction as to the method for grinding. There can be mentioned a method of pressing the fired body against a mesh or a screen of 10 to 100 µm in opening diameter, and conducting disintegration, and a method using a pot mill, a beads mill, a hammer mill, a jet mill or the like. As to the method for classification, there is no particular restriction. There can be mentioned, for example, a method of conducting sieving using a mesh of 5 to 100 µm in opening diameter, a method by water elutriation, and a method of using an air classifier, a sieve classifier, an elbow jet classifier or the like.

By re-heating the obtained primary particles at a temperature lower than the above-mentioned firing temperature (for example, 600 to 700°C), oxygen defect is cured and there can be produced a positive electrode active material comprising a large number of crystal grains containing a plurality of single particles and secondary particles formed by mutual connection of a plurality of primary particles. Incidentally, this re-heating may be conducted prior to the grinding treatment. When the re-heating step is conducted after the grinding (or after the classification), the powder after re-heating may be subjected again to grinding and classification. The grinding and the classification can be conducted by the above-mentioned methods, etc.

The positive electrode active material of the present invention can be produced by the above-mentioned production method. According to the production method, there can be obtained a positive electrode active material comprising a large number of crystal grains composed of lithium manganate of spinel structure, wherein the large number of crystal grains contain primary particles of 3 to 20 µm in particle diameter by 70 areal % or more relative to all the crystal grains, the primary particles contain a component having a rectangular plane, and the ratio of the total area of all the rectangular planes to the total surface area of the primary particles is 0.5 to 5%.

### 2. Lithium secondary battery

The lithium secondary battery of the present invention comprises an electrode body which has a positive electrode containing the above-mentioned positive electrode active material and a negative electrode containing a negative electrode active material. The lithium secondary battery of the present invention is superior in cycle characteristics at high temperatures. Such a characteristics appears strikingly particularly in a large-capacity secondary battery produced using a large amount of an electrode active material. Therefore, the lithium secondary battery of the present invention can be used preferably, for example, as a driven motor electric source of electric vehicle or hybrid electric vehicle. Incidentally, the lithium secondary battery of the present invention can also be used preferably as a small-capacity cell (e.g. coin cell).

The positive electrode can be obtained, for example, by mixing a positive electrode active material with acetylene black (a conductive agent), polyvinylidene fluoride (PVDF) (a binder), polytetrafluoroethylene (PTFE), etc. at given proportions to prepare a positive electrode material and coating the positive electrode material on the surface of metal foil or the like.

As the positive electrode active material, there may be used lithium manganate of spinel structure alone, or a mixture thereof with two or more kinds of other active materials (e.g. lithium nickelate, lithium cobaltate, lithium cobalt-nickel-manganate (so-called ternary system), and lithium iron phosphate). Lithium nickelate consumes the hydrofluoric acid which generates in the electrolytic solution of battery and which causes the dissolution of manganese (the dissolution is the main cause of durability deterioration of lithium manganate), and suppresses the dissolution of manganese effectively.

As the materials (other than the positive electrode active material) required for constitution of the lithium secondary battery of the present invention, there can be used various known materials. As the negative electrode active material, there can be used, for example, an amorphous carbonaceous material (e.g. soft carbon or hard carbon), highly graphitized carbon material (e.g. artificial graphite or natural graphite) and acetylene black. Of these, a highly graphitized carbon material (which is high in lithium capacity) is used preferably. Using such a negative electrode active material, a negative electrode material is prepared; the negative electrode material is coated on a metal foil or the like; thereby, a negative electrode is obtained.

As the organic solvent used in the non-aqueous electrolytic solution, there can be preferably used a carbonic acid ester type solvent (e.g. ethylene carbonate (EC), diethyl carbonate (DEC), dimethyl carbonate (DMC) or propylene carbonate (PC)), a single solvent (e.g. γ -butyrolactone, tetrahydrofuran, acetonitrile or the like), or a mixed solvent thereof.

As specific examples of the electrolyte, there can be mentioned a lithium complex fluoride compound (e.g. lithium phosphate hexafluoride (LiPF₆) or lithium borofluoride (LiBF₄)) and a lithium halide (e.g. lithium perchlorate (LiClO₄)). Ordinarily, at least one kind of such electrolyte is used by being dissolved in the above-mentioned organic solvent. Of these electrolytes, LiPF₆ is used preferably because it hardly causes oxidative decomposition and gives a high conductivity in non-aqueous electrolytic solution.

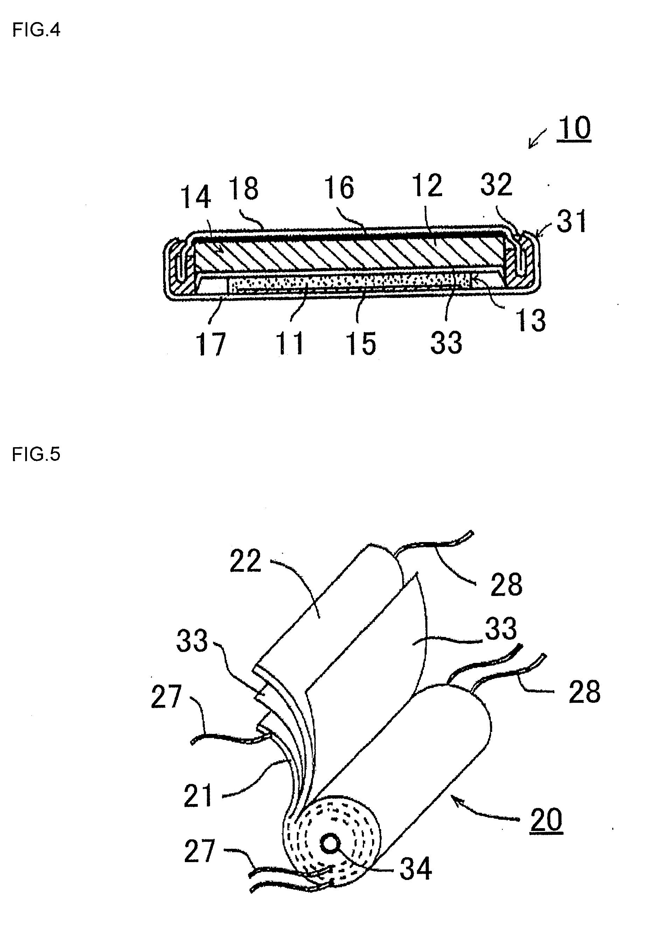

As specific examples of the battery structure, there can be mentioned a coin cell type lithium secondary battery (coin cell) 10 such as shown in Fig. 4, wherein an electrolytic solution is filled between a positive electrode plate 11 and a negative electrode plate 12 with a separator 33 provided between them; and a cylindrical lithium secondary battery such as shown in Fig. 5, using an electrode body 21 formed by winding or laminating, via a separator 33, a positive electrode plate 11 (prepared by coating a positive electrode active material on a metal foil) and a negative electrode 12 (prepared by coating a negative electrode active material on a metal foil).

### EXAMPLES

The present invention is described specifically below by way of Examples. However, the present invention is in no way restricted to the following Examples. Incidentally, in the following Examples and Comparative Examples, "parts" are based on mass unless otherwise specified. The measurement methods of properties and the evaluation methods of properties are shown below.

### [Large-particle ratio (areal %)]

A positive electrode active material powder was heat-treated under the air at 880°C for 12 hours for smoothening of particle surface and then placed on a carbon tape so that there was no piling of particles; Au was coated thereon in a thickness of about 10 nm using an ion sputtering apparatus ("JFC-1500" (trade name), a product of JEOL Ltd.). Then, a secondary electron image of particles was taken, using an electron microscope ("JSM-6390" (trade name), a product of JEOL Ltd.), by selecting such a magnification that 20 to 50 primary particles each having the maximum diameter of 5 µm or larger were seen in the visual field (the photographing conditions were accelerating voltage of 15 kV and working distance of 10 mm). In the image obtained, there were measured the area occupied by all the crystal grains (whose particle diameters could be measured) (total surface area (A)) and the area occupied by the primary particles of 3 to 20 µm in particle diameter (surface area (a) of large-particle primary particles) using an image edit software ("photoshop" (trade name), a product of Adobe Systems Incorporated). An expression (a/A)x100 was calculated, and the result was taken as large-particle ratio (areal %). For each primary particle in the image obtained, there was calculated an average of the maximum diameter of the particle part not hidden by other particles and the largest diameter of the diameters at right angles to the above maximum diameter, and the average was taken as the particle diameter (µm) of the primary particle. In this way, particle diameters were measured for all primary particles excluding the particles which were hidden by other particles and were uncalculable.

### [Specific surface area (m²/g)]

Measured using "Flowsorb III 2305" (trade name) (a product of Shimadzu Corporation), by using nitrogen as an adsorption gas.

### [Rectangular plane ratio (%)]

A positive electrode active material powder was heat-treated under the air at 880°C for 12 hours for smoothening of particle surface and then placed on a carbon tape so that there was no piling of particles; Au was coated thereon in a thickness of about 10 nm using an ion sputtering apparatus ("JFC-1500" (trade name), a product of JEOL Ltd.). Then, a secondary electron image of particles was taken, using an electron microscope ("JSM-6390" (trade name), a product of JEOL Ltd.), by selecting such a magnification that 20 to 50 primary particles each having the maximum diameter of 5 µm or larger were seen in the visual field (the photographing conditions were accelerating voltage of 15 kV and working distance of 10 mm). In the image obtained, there were measured the area occupied by all the crystal grains (total surface area (A)) and the area of all the confirmable rectangular parts (area (b) of rectangular planes) using an image edit software ("photoshop" (trade name), a product of Adobe Systems Incorporated). An expression (b/A)x100 was calculated, and the result was taken as rectangular plane ratio (%). Incidentally, the rectangular parts refer to the image area, occupied by the rectangular planes of the planes surrounded by four straight ridgelines.

The rectangular planes included not only planes shown as rectangle in the image, but also planes which were not rectangle in the image but were presumed to be actually rectangle (see, for example, Fig. 2A to Fig. 2F). As to the planes which could not be confirmed as rectangular plane because part of the ridgelines constituting each plane was unclear, such planes were judged as rectangular plane when they satisfied both of the following conditions 1 and 2.

### Condition 1

When the clear ridgeline(s) is (are) extended so as to restore the four sides and angles of the plane, the plane formed is a rectangle.

### Condition 2

The longest length of the clear parts of the ridgelines constituting of plane is 50% or larger of the length of one side of the plane formed by extending the clear parts.

The planes for which a complete rectangle could not be confirmed, such as no formation of plane per se, plane having unclear ridgelines owing to the roundish vertex of crystal grain, plane in which the angle(s) of rectangular plane was (were) chipped off, plane in which part of rectangular plane was hidden by another crystal grain seen in the image, and the like, were excluded from the definition of rectangular part.

### [Proportion (areal %) of single particles]

A positive electrode active material was mixed with a conductive resin ("Technovit 5000" (trade name), a product of Heraeus Kulzer GmbH), followed by curing. Then, the cured material was subjected to mechanical grinding and then ion-polished using a cross section polisher ("SM-09010" (trade name), a product of JEOL Ltd.). The backscattered electron image of the ion-polished material was taken using a scanning electron microscope ("ULTRA 55" (trade name), a product of Carl Zeiss, Inc.) and the cross section of the positive electrode active material was observed.

In the backscattered electron image, the contrast differs owing to channeling effect when the direction of crystal differs. Therefore, when a particle boundary part is present in the crystal grain being observed, the particle boundary part becomes clear or unclear by slightly changing the direction of observation of sample (the inclination of sample). Utilizing this phenomenon, the presence of particle boundary part can be confirmed; thereby, there can be identified whether or not a crystal grain is a single particle, or a polycrystal particle formed by connection of primary particles of different crystal directions or an agglomerated particle.

There is a case in which microparticles (crystal grains) significantly smaller in diameter (e.g. about 0.1 to 1 µm) than the particle diameter of single particle adhere onto the surface of a crystal grain (see Fig. 6A). Also, there is a case in which polycrystal particles or agglomerated particles adhere onto each other at a small part (see Fig. 6B). In such cases, the parts (adhesion arts 50a to 50c in Fig. 6A) at which microparticles 51 to 53 adhere onto the surface of a crystal grain 41, and the part (adhesion part 50d in Fig. 6B) at which crystal grains 42 and 43 are connected to each other, are slight; therefore, there is no influence on rate characteristics and durability. Accordingly, such crystal grains can be regarded substantially as single particle. Specifically explaining, when the length of adhesion part (the total of all adhesion points when there were a plurality of adhesion parts) of a crystal grain was 1/5 or smaller relative to the circumference of the crystal grain estimated from the backscattered electron image by using an image edit software ("Image-Pro" (trade name), a product of Media Cybernetics, Inc.), the crystal grain was regarded as single particle and was counted.

In this way, there was judged whether or not each crystal grain was a single particle. The proportion (areal %) of single particles was calculated by measuring the area (C) occupied by all crystal grains whose areas could be measured from the backscattered electron image and the area (c) occupied by all single crystals, using the above-mentioned image edit software and substituting them into an expression (c/C)x100.

### [Rate characteristics (%)]

At a test temperature of 20°C, constant-current charge was conducted at a current value of 0.1 C-rate until the battery voltage became 4.3 V. Constant-voltage charge was conducted at a current condition of keeping the battery voltage at 4. 3 V until the current decreased to 1/20. Then, a halt of 10 minutes was conducted. Subsequently, constant-current discharge was conducted at a current value of 1 C-rate until the battery voltage became 3.0 V. Then, a halt of 10 minutes was conducted. This charge-discharge operation was taken as 1 cycle. Total 3 cycles were conducted. A discharge capacity at the 3rd cycle was measured and taken as discharge capacity C_{(1C)}. Next, at a test temperature of 20°C, constant-current charge was conducted at a current value of 0.1 C-rate until the battery voltage became 4.3 V. Constant-voltage charge was conducted at a current condition of keeping the battery voltage at 4.3 V until the current decreased to 1/20. Then, a halt of 10 minutes was conducted. Subsequently, constant-current discharge was conducted at a current value of 5 C-rate until the battery voltage became 3.0 V. Then, a halt of 10 minutes was conducted. This charge-discharge operation was taken as 1 cycle. Total 3 cycles were conducted. A discharge capacity at the 3rd cycle was measured and taken as discharge capacity C_{(5C)}. The capacity maintenance ratio (%) of the discharge capacity C_{(5C)} at 5 C-rate to the discharge capacity C_{(1C} at 1C rate was calculated and taken as rate characteristics.

### [Cycle characteristics (%)]

At a test temperature of 60°C, charge was conducted at a constant current and a constant voltage of 1 C-rate until the battery voltage became 4.3 V, and discharge was conducted at a constant current of 1 C-rate until the battery voltage became 3.0 V. The capacity maintenance ratio (%), obtained by dividing the discharge capacity of the battery after 100 cycles of charge-discharge by its initial capacity, was evaluated as cycle characteristics.

### (Example 1) Preparation of positive electrode active material

### (1) Formation step

There were weighed a Li₂CO₃ powder (a product of The Honjo Chemical Corporation, fine grade, average particle diameter: 3 µm) and a MnO₂ powder (a product of Tosoh Corporation, electrolytic manganese dioxide, FM grade, average particle diameter: 5 µm, purity: 95%), so as to give a chemical formula of Li_{1.1}Mn_{1.9}O₄. Hundred parts of these powders and 100 parts of an organic solvent (as a dispersing medium) (a mixed solvent of equal volumes of toluene and isopropyl alcohol) were placed in a cylindrical, wide-mouthed bottle made of a synthetic resin and subjected to wet mixing and grinding for 16 hours with a ball mill containing zirconia balls of 5 mm in diameter, to obtain a mixed powder.

Ten parts of a polyvinyl butyral (as a binder) ("S-LEC BM-2" (trade name), a product of Sekisui Chemical Co., Ltd.), 4 parts of a plasticizer (("DOP" (trade name), a product of Kurogane Kasei Co., Ltd.) and 2 parts of a dispersing agent ("RHEODOL SP-O 30" (trade name), a product of Kao Corporation) were added to the mixed powder, followed by mixing, thereby a forming material of slurry state was obtained. The forming material of slurry state was degassed under vacuum with stirring, to adjust the slurry viscosity to 4,000 mPa·s. The viscosity-adjusted forming material of slurry state was spread on a PET film by doctor blade method so as to give an after-drying thickness of 10 µm, to obtain a sheet-shaped formed body.

### (2) Firing step

The sheet-shaped formed body was peeled off from the PET film, cut into a 300 mm x 300 mm size using a cutter, and placed in an alumina-made sagger (dimension: 90 mm (long) x 90 mm (wide) x 60 mm (height)) in a crumpled state. Then, degreasing was conducted at 600°C for 2 hours, and then, the temperature was raised to 950°C at a rate of 200°C/hr, and firing was conducted at 950°C for 12 hours from the time reaching at 950°C. Incidentally, the firing step was conducted in a state that all the covers of the sagger were opened (that is, under the air).

### (3) Grinding step

The sheet-shaped formed body after firing was placed on a polyester-made mesh having an average opening diameter of 20 µm and pressed lightly against the mesh using a spatula, for disintegration.

The resulting powder was dispersed in ethanol and subjected to an ultrasonic treatment (38 kHz, 5 minutes) using an ultrasonic cleaner. Then, the resulting material was passed through a 5 µm (average opening diameter) mesh made of polyester to recover a powder remaining on the mesh to obtain primary particles.

The primary particles were heat-treated under the air at 650°C for 24 hours to produce a positive electrode active material (1). The positive electrode active material (1) had a large-particle ratio of 75 areal %, a specific surface area of 0.5 m²/g and a rectangular plane ratio of 0.5%.

### (Examples 2 to 8 and Comparative Examples 1 and 2): Preparation of positive electrode active materials

Positive electrode active materials (2) to (10) were produced in the same manner as in Example 1 except that there were employed the Bi addition amounts in formation step, the after-drying thicknesses of sheet-shaped formed bodies, and the firing conditions in firing step, all shown in Table 1. Incidentally, each Bi addition amount in Table 1 is a mass ratio (%) of Bi₂O₃ relative to MnO₂ and, as the raw material for Bi, there was used a Bi₂O₃ powder (particle diameter: 0.3 µm, a product of Taiyo Koko Co. , Ltd.) as one of the raw material compounds weighed. Each positive electrode active material obtained was measured for large-particle ratio, specific surface area and rectangular plane ratio. The measurement results are shown in the following Table 1.

**Table 1**

| | Formation step | | Firing step | | | | Evaluation | | | Positive electrode active material |
|---|---|---|---|---|---|---|---|---|---|---|
| | Bi addition amount (mass %) | Thickness (µm) | Firing temp. (°C) | Keeping time (hr) | Rate of temp. increase (°C/hr) | Atmosphere of firing | Large-par ticle ratio (areal %) | Specific surface area (m²/g) | Rectangular plane ratio (areal %) | |
| Ex. 1 | 0 | 10 | 950 | 12 | 200 | Air | 75 | 0.49 | 0.5 | (1) |
| Ex. 2 | 0.5 | 20 | 900 | 8 | 200 | Air | 75 | 0.42 | 0.6 | (2) |
| Ex. 3 | 0.1 | 10 | 900 | 12 | 200 | Air | 75 | 0.39 | 0.8 | (3) |
| Ex. 4 | 0.5 | 15 | 900 | 6 | 200 | Air | 80 | 0.33 | 1 | (4) |
| Ex. 5 | 0 | 15 | 1000 | 6 | 200 | Oxygen | 75 | 0.43 | 1.5 | (5) |
| Ex. 6 | 1 | 15 | 900 | 12 | 200 | Air | 85 | 0.23 | 1.9 | (6) |
| Ex. 7 | 1 | 15 | 900 | 12 | 20 | Air | 90 | 0.14 | 2.7 | (7) |
| Ex. 8 | 1 | 12 | 920 | 12 | 20 | Air | 85 | 0.22 | 4.6 | (8) |
| Comp. Ex. 1 | 0 | 20 | 900 | 12 | 200 | Oxygen | 70 | 0.46 | 0.1 | (9) |
| Comp. Ex. 2 | 3 | 10 | 920 | 6 | 20 | Air | 90 | 0.26 | 6.9 | (10) |

### (Example 9) : Evaluation of lithium secondary battery

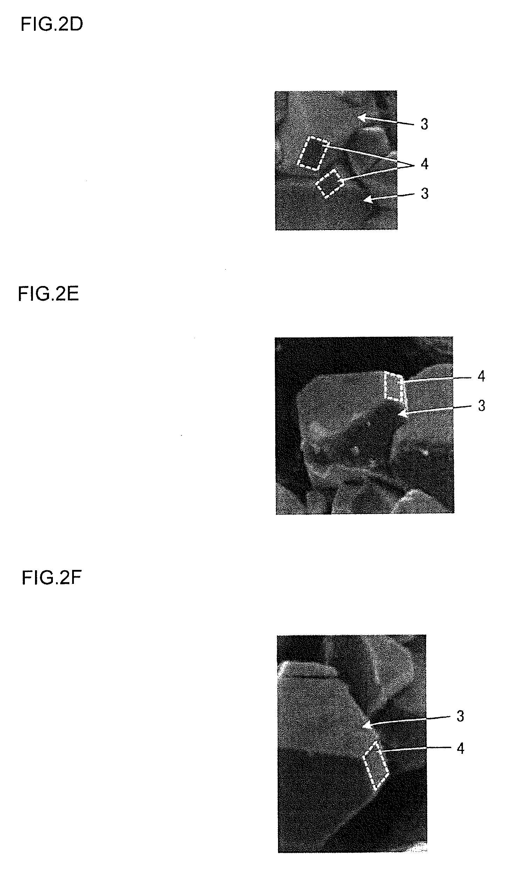

Fig. 2 is a sectional view showing an embodiment of the lithium secondary battery of the present invention. In Fig. 2, a lithium secondary battery (coin cell) 10 was produced by laminating a positive electrode collector 15, a positive electrode layer 13, a separator 3, a negative electrode layer 14 and a negative electrode collector 16 in this order, and encapsulating the resulting laminate and an electrolyte in a battery case 1 (containing a positive electrode side container 17, a negative electrode side container 18 and an insulation gasket 2) in liquid tight.

Specifically explaining, there were mixed 5 mg of the positive electrode active material prepared in Example 1, acetylene black (as a conductive agent) and a polytetrafluoroethylene (PTFE) (as a binder) at a mass ratio of 5:5:1, to produce a positive electrode material. The positive electrode material was placed on an Al mesh of 15 mm in diameter and press-molded into a disc using a press at a force of 10 kN, to produce a positive electrode layer 13.

Then, a lithium secondary battery (coin cell) 10 was produced using the above-produced positive electrode layer 13, an electrolytic solution prepared by dissolving LiPF₆ in an organic solvent consisting of equal volumes of ethylene carbonate (EC) and diethyl carbonate (DEC), so as to give a LiPF₆ concentration of 1 mol/L, a negative electrode layer 14 made of a Li plate, a negative electrode collector 16 made of a stainless steel plate, and a polyethylene film-made separator 3 having lithium ion permeability. The lithium secondary battery (coin cell) 10 produced had a rate characteristics of 91% and a cycle characteristics of 94%.

### (Examples 10 to 16 and Comparative Examples 3 and 4) : Evaluation of lithium secondary batteries

Lithium secondary batteries were produced in the same manner as in Example 9, using the positive electrode active materials (2) to (10) produced in Examples 2 to 9 and Comparative Examples 1 and 2. By using each lithium secondary battery produced, rate characteristics and cycle characteristics were evaluated. The evaluation results are shown in the following Table 2.

**Table 2**

| | Positive electrode active material | Evaluation | |
|---|---|---|---|
| | | Rate characteristics (%) | Cycle characteristics (%) |
| Example 9 | (1) | 91 | 94 |
| Example 10 | (2) | 93 | 95 |
| Example 11 | (3) | 93 | 94 |
| Example 12 | (4) | 96 | 96 |
| Example 13 | (5) | 95 | 95 |
| Example 14 | (6) | 96 | 95 |
| Example 15 | (7) | 95 | 95 |
| Example 16 | (8) | 97 | 93 |
| Comparative Example 3 | (9) | 85 | 96 |
| Comparative Example 4 | (10) | 96 | 89 |

### (Examples 17 to 24 and Comparative Examples 5 and 6) :

### Preparation of positive electrode active materials

### (Al-substituted crystals)

Positive electrode active materials (11) to (20) were obtained in the same manner as in Example 1 except that an Al(OH)₃ powder ("H-43M" (trade name), a product of Showa Denko K. K., average particle diameter: 0.8 µm) was added as a raw material compound so as to give a chemical formula of Li_{1.08}Al_{0.09}Mn_{1.83}O₄. Each positive electrode active material obtained was measured for large-particle ratio, specific surface area and rectangular plane ratio. The measurement results are shown in the following Table 3.

**Table 3**

| | Formation step | | Firing step | | | | Evaluation | | | Positive electrode active material |
|---|---|---|---|---|---|---|---|---|---|---|
| | Bi addition amount (mass %) | Thickness (µm) | Firing temp. (°C) | Keeping time (hr) | Rate of temp. increase (°C/hr) | Atmosphere of firing | Large-par ticle ratio (areal %) | Specific surface area (m²/g) | Rectangular plane ratio (areal %) | |
| Ex. 17 | 0 | 10 | 950 | 12 | 200 | Air | 75 | 0.46 | 0.5 | (11) |
| Ex. 18 | 0.5 | 20 | 900 | 8 | 200 | Air | 80 | 0.39 | 0.7 | (12) |
| Ex. 19 | 0.1 | 10 | 900 | 12 | 200 | Air | 85 | 0.38 | 0.8 | (13) |
| Ex. 20 | 0.5 | 15 | 900 | 6 | 200 | Air | 90 | 0.28 | 1 | (14) |
| Ex. 21 | 0 | 15 | 1000 | 6 | 200 | Oxygen | 85 | 0.42 | 1.6 | (15) |
| Ex. 22 | 1 | 15 | 900 | 12 | 200 | Air | 85 | 0.18 | 2 | (16) |
| Ex. 23 | 1 | 15 | 900 | 12 | 20 | Air | 90 | 0.14 | 2.8 | (17) |
| Ex. 24 | 1 | 12 | 920 | 12 | 20 | Air | 80 | 0.23 | 4.8 | (18) |
| Comp. Ex. 5 | 0 | 20 | 900 | 12 | 200 | Oxygen | 75 | 0.48 | 0.2 | (19) |
| Comp. Ex. 6 | 3 | 10 | 920 | 6 | 20 | Air | 90 | 0.22 | 6.7 | (20) |

### (Examples 25 to 32 and Comparative Examples 7 and 8) : Evaluation of lithium secondary batteries (Al-substituted crystals)

Lithium secondary batteries were produced using the positive electrode active materials (11) to (20) produced in Examples 17 to 24 and Comparative Examples 5 and 6. By using each lithium secondary battery produced, rate characteristics and cycle characteristics were evaluated. The evaluation results are shown in the following Table 4.

**Table 4**

| | Positive electrode active material | Evaluation | |
|---|---|---|---|
| | | Rate characteristics (%) | Cycle characteristics (%) |
| Example 25 | (11) | 90 | 96 |
| Example 26 | (12) | 92 | 97 |
| Example 27 | (13) | 92 | 96 |
| Example 28 | (14) | 94 | 96 |
| Example 29 | (15) | 94 | 97 |
| Example 30 | (16) | 95 | 97 |
| Example 31 | (17) | 95 | 96 |
| Example 32 | (18) | 95 | 95 |
| Comparative Example 7 | (19) | 84 | 97 |
| Comparative Example 8 | (20) | 96 | 91 |

As is clear from Tables 1 to 4, the lithium secondary batteries constituted by a positive electrode active material having a rectangular plane ratio of 0.5 to 5.0% and a large-particle ratio of 70 areal % or more were superior in rate characteristics and cycle characteristics. The lithium secondary batteries containing, as the positive electrode active material, a lithium manganate in which part of Mn was substituted by aluminum were superior in cycle characteristics as compared with the lithium secondary batteries containing, as the positive electrode active material, unsubstituted lithium manganate.

### (Examples 33 and 34): Preparation of positive electrode active materials

The positive electrode active material produced in Example 6 or Example 22 was passed through a polyester-made mesh of 20 µm in average opening diameter, to conduct reclassification. The powder (which had been passed through a polyester-made mesh of 20 µm in average opening diameter) was recovered to obtain a positive electrode active material of Example 33 or Example 34. Each positive electrode active material obtained was evaluated for large-particle ratio, specific surface area, rectangular plane ratio and proportion of single particles. The results of the evaluation are shown in the following Table 5.

**Table 5**

| | Chemical formula | Evaluation | | | | Positive electrode active material |
|---|---|---|---|---|---|---|
| | | Large-particle ratio (areal %) | Specific surface area (m²/g) | Rectangular plane ratio (areal %) | Proportion of single particles (areal %) | |
| Example 6 | Li_{1.1}Mn_{1.9}O₄ | 85 | 0.23 | 1.9 | 30 | (6) |
| Example 33 | Li_{1.1}Mn_{1.9}O₄. | 85 | 0.24 | 1.9 | 40 | (21) |
| Example 22 | Li_{1.08}Al_{0.09}Mn_{1.83}O₄ | 85 | 0.18 | 2 | 30 | (16) |
| Example 34 | Li_{1.08}Al_{0.09}Mn_{1.93}O₄ | 85 | 0.19 | 2 | 40 | (22) |

### (Examples 35 and 36): Evaluation of lithium secondary batteries

Lithium secondary batteries were produced using the positive electrode active materials (6), (16), (21) and (22) produced in Examples 6, 22, 33 and 34. Each lithium secondary battery was evaluated for rate characteristics and cycle characteristics. The results of the evaluation are shown in the following Table 6.

**Table 6**

| | Positive electrode active material | Evaluation | |
|---|---|---|---|
| | | Rate characteristics (%) | Cycle characteristics (%) |
| Example 14 | (6) | 96 | 95 |
| Example 35 | (21) | 98 | 95 |
| Example 30 | (16) | 95 | 97 |
| Example 36 | (22) | 97 | 97 |

As is appreciated from Table 6, rate characteristics was particularly superior when the proportion of single particles was 40 areal % or more (Examples 35 and 36).

### Industrial Applicability

The positive electrode active material of the present invention can constitute a lithium secondary battery superior in rate characteristics and cycle characteristics. The lithium secondary battery of the present invention can be effectively used as a battery for driving of hybrid electric vehicles, electronics, communication devices, etc.

### Description of Reference Numerals

1, 3, 3a: primary particle, 2: gray plane (rectangular plane), 4: rectangular plane, 10: coin cell, 11, 21: positive electrode plate, 12, 22: negative electrode plate, 13: positive electrode layer, 14: negative electrode layer, 15: positive electrode collector, 16: negative electrode collector, 17: positive electrode side container, 18: negative electrode side container, 20: collector, 27: tab for positive electrode, 28: tab for negative electrode, 30: secondary particle, 31: battery case, 32: insulation gasket, 33: separator, 34: core, 40: single particle, 41 to 48: crystal grain, 50a to 50g: adhesion part (particle boundary part), 51 to 53: microparticle.

## Claims

1. A positive electrode active material comprising a large number of crystal grains composed of lithium manganate of spinel structure, wherein
the large number of crystal grains contain primary particles of 3 to 20 µm in particle diameter by 70 areal % or more relative to all the crystal grains,
the primary particles contain a component having a rectangular plane, and
the ratio of the total area of all the rectangular planes to the total surface area of the primary particles is 0.5 to 5%.

2. The positive electrode active material according to Claim 1, wherein the crystal grains have a specific surface area of 0.1 to 0.5 m²/g.

3. The positive electrode active material according to Claim 1 or 2, wherein the large number of crystal grains contain single particles by 40 areal % or more.

4. The positive electrode active material according to any one of Claims 1 to 3, wherein the large number of crystal grains further contain secondary particles each formed by mutual connection of a plurality of the primary particles.

5. A lithium secondary battery comprising an electrode body having a positive electrode containing a positive electrode active material according to any one of Claims 1 to 4 and a negative electrode containing a negative electrode active material.
